# EUROPÄISCHE PATENTSCHRIFT

(11) **EP 3 144 197 B1**
(45) Veröffentlichungstag und Bekanntmachung des Hinweises auf die Patenterteilung: **14.07.2021**
(21) Anmeldenummer: 16186269.3
(22) Anmeldetag: 30.08.2016
(51) Int. Cl.: B60W 30/16, B60W 50/00

(54) **VERFAHREN ZUR AUTOMATISCHEN BESCHLEUNIGUNGSANPASSUNG BEI EINEM KRAFTFAHRZEUG**
METHOD FOR AUTOMATICALLY ADAPTING ACCELERATION IN A MOTOR VEHICLE
PROCEDE D'ADAPTATION AUTOMATIQUE DE L'ACCELERATION SUR UN VEHICULE AUTOMOBILE

(30) Priorität: 15.09.2015 DE 102015217577
(43) Veröffentlichungstag der Anmeldung: 22.03.2017
(73) Patentinhaber: Ford Global Technologies, LLC, Dearborn, MI 48126 (US)
(72) Erfinder: Ediger, Andreas, 50769 Köln (DE); Bäcker, Benjamin, 50670 Köln (DE); Rosenberg, Stephanie, 53757 St. Augustin (DE); Strauch, Manuel, 52379 Langerwehe (DE); Mukkala, Benjamin Carl, Ann Arbor, MI Michigan 48108 (US); Mills, Aaron L., Ann Arbor, MI Michigan 48104 (US)
(74) Vertreter: Dörfler, Thomas

(56) Entgegenhaltungen:
- EP-A2- 2 803 521
- WO-A1-2015/047177
- DE-A1-102007 005 245
- DE-A1-102010 006 442
- DE-A1-102010 053 818
- DE-A1-102013 224 716

## Beschreibung

Die Erfindung betrifft ein Verfahren zur automatischen Beschleunigungsanpassung bei einem Kraftfahrzeug gemäß dem Oberbegriff von Anspruch 1.

Aus dem Stand der Technik sind Abstandsregeltempomaten bekannt, welche die Geschwindigkeit des entsprechenden Fahrzeugs derart regeln, dass ein gewünschter Abstand oder ein Abstandsbereich zu einem vorausfahrenden Fahrzeug eingehalten wird. Das führt zu einer merklichen Entlastung des Fahrers, der die entsprechenden Brems- und Beschleunigungsschritte nicht mehr selbst ausführen muss.

Die EP 1 930 863 B1 beschreibt ein System zur automatischen Erkennung von Verkehrszeichen und nennt grundsätzlich die Möglichkeit, ein solches System in einen Abstandsregeltempomaten zu integrieren.

Die DE 10 2011 053 778 A1 beschreibt ein System zur automatischen Erkennung von Verkehrszeichen und schlägt vor, eine Gaspedalempfindlichkeit in Abhängigkeit von einer erkannten Geschwindigkeitsbegrenzung einzustellen.

Die US 2012/0253628 A1 beschreibt ein Kraftfahrzeug mit einem Kamerasystem zur automatischen Erkennung von Verkehrszeichen und mit einem Abstandsregeltempomaten, dem eine Sollgeschwindigkeit vorgegeben werden kann. Wenn anhand eines Verkehrszeichens eine Tempobegrenzung erkannt wird, welche nicht der Sollgeschwindigkeit entspricht, so wird der Abstandsregeltempomat ausgeschaltet und ggf. mit einer auf die Tempobegrenzung aktualisierten Sollgeschwindigkeit wieder eingeschaltet.

Die DE 103 03 010 A1 beschreibt ein Kraftfahrzeug mit einem Abstandsregeltempomaten und einem System zum automatischen Erfassen und Auswerten von Verkehrszeichen. Es wird vorgeschlagen, dass bei Befahren eines Straßenabschnitts mit einer Tempobegrenzung diese Tempobegrenzung die von dem Abstandsregeltempomaten bestimmte Sollgeschwindigkeit nach oben begrenzen soll. Auf diese Weise soll verhindert werden, dass im Rahmen der Abstandsregelung die vorgeschriebene Tempobegrenzung überschritten wird.

Die DE 10 2010 006 442 A1 beschreibt ein Verfahren zum Regeln der Geschwindigkeit eines Fahrzeugs in Übereinstimmung mit Anforderungen eines Geschwindigkeitsregelungssystems, das eine Mehrzahl von Geschwindigkeitsregelungsmerkmalen enthält.

Die DE 10 2013 224 716 A1 beschreibt ein Verfahren zum Durchführen von Diagnose- und/oder Adaptionsfunktionen in einem Kraftfahrzeug.

Die WO 2015/047177 A1 beschreibt ein System und ein Verfahren zum Steuern eines Fahrzeugzugs, wobei der Fahrzeugzug mindestens ein Leitfahrzeug und ein weiteres Fahrzeug umfasst und wobei jedes Fahrzeug eine Positionierungseinheit und eine Einheit zur drahtlosen Kommunikation aufweist.

Die EP 2 803 521 A2 beschreibt eine Fahrassistenzvorrichtung für ein Kraftfahrzeug, wobei das Kraftfahrzeug eine Verkehrszeichenüberwachungseinrichtung sowie eine Geschwindigkeitsbegrenzungseinrichtung aufweist, welche die Fahrgeschwindigkeit des Kraftfahrzeugs in einem Geschwindigkeitsbegrenzungsmodus auf einen Grenzwert begrenzt.

Die DE 10 2010 053 818 A1 beschreibt ein Verfahren und eine Vorrichtung zur Erkennung eines Anhängers eines Kraftfahrzeugs, wobei der Anhänger durch eine Kopplungseinrichtung mit dem Kraftfahrzeug verbindbar ist.

Die DE 10 2007 005 245 A1 beschreibt ein Verfahren zum Betreiben eines Fahrerassistenzsystems in einem Kraftfahrzeug, indem auf Verkehrsschildern angegebene erste verkehrsrelevante Informationen durch eine Erkennungseinrichtung erkannt und dem Fahrer mittels eines Anzeigeinstruments angezeigt werden.

Nachteilig an diesem Stand der Technik ist jedoch, dass bei diesem Ansatz einseitig die vorgegebene Tempobegrenzung gegenüber anderen Faktoren, wie z. B. einer sicheren Abstandsregelung und dem Fahrkomfort, bevorzugt wird.

Daher besteht die Aufgabe der Erfindung darin, eine verbesserte Berücksichtigung von Tempovorgaben bei der automatischen Abstandsregelung bereitzustellen.

Diese Aufgabe wird bezogen auf ein Verfahren zur automatischen Beschleunigungsanpassung gemäß dem Oberbegriff von Anspruch 1 durch die Merkmale des kennzeichnenden Teils von Anspruch 1 gelöst.

Das erfindungsgemäße Verfahren dient zur automatischen Beschleunigungsanpassung bei einem Kraftfahrzeug. Dabei bestimmt eine im Kraftfahrzeug enthaltende Erfassungsvorrichtung eine Tempobegrenzung, welche für einen Straßenabschnitt gilt. Diese Tempobegrenzung kann dabei sowohl von einer Norm, etwa der Straßenverkehrsordnung o. dgl., vorgegeben sein als auch eine praktische Vorgabe derart sein, dass sie sich aus einer aktuellen Verkehrssituation oder einer Streckenführung ergibt. Weiter bestimmt eine im Kraftfahrzeug enthaltende Tempomatvorrichtung basierend auf der Tempobegrenzung eine Tempomat-Sollbeschleunigung. Unter jedweder Art von Beschleunigung ist hier und nachfolgend auch eine negative Beschleunigung im Sinne einer Verzögerung zu verstehen. Ferner steuert eine im Kraftfahrzeug enthaltende Ansteuervorrichtung eine ebenfalls im Kraftfahrzeug enthaltende Antriebsvorrichtung basierend auf der Tempomat-Sollbeschleunigung mit einer Antriebs-Sollbeschleunigung an. Die Antriebsvorrichtung wirkt auf den Motor und Bremsen des Kraftfahrzeugs zum Einstellen der Istbeschleunigung des Kraftfahrzeugs. Eine weiterhin im Kraftfahrzeug enthaltende Abstandsregelvorrichtung bestimmt - basierend auf einem erfassten Fahrzeugabstand zu einem vorausfahrenden Fahrzeug - eine Abstandsregel-Sollbeschleunigung, wobei die Antriebs-Sollbeschleunigung durch die Abstandsregel-Sollbeschleunigung so begrenzt wird, dass die Antriebs-Sollbeschleunigung unter der Abstandsregel-Sollbeschleunigung bleibt. Unter einem solchen vorausfahrenden Fahrzeug ist ein weiteres Fahrzeug zu verstehen, welches beabstandet zu dem Kraftfahrzeug den Straßenabschnitt bereits befahren hat oder im Begriff steht, den Straßenabschnitt zu befahren.

In der Regel ergibt sich eine Ansteuerung der Antriebsvorrichtung des Kraftfahrzeugs mit einer von Null verschiedenen Antriebs-Sollbeschleunigung dann, wenn eine Sollgeschwindigkeit, die sich aus der Tempobegrenzung und aus der Abstandsregelvorrichtung ergeben kann, nicht mit einer Istgeschwindigkeit des Kraftfahrzeugs übereinstimmt. Je größer die Differenz zwischen Ist- und Sollgeschwindigkeit, umso größer wird auch die Antriebs-Sollbeschleunigung sein. Gleichwohl ist es vorteilhaft, für die Antriebs-Sollbeschleunigung einen differenzierten Verlauf als nur "Sprünge" vorzusehen.

Erfindungsgemäß bestimmt daher die Tempomatvorrichtung die Tempomat-Sollbeschleunigung basierend auf einem aktiven Sollbeschleunigungsprofil, wobei das Sollbeschleunigungsprofil einen zeitlichen Sollbeschleunigungsverlauf definiert und der zeitliche Sollbeschleunigungsverlauf mit zunehmender Zeit eine im Wesentlichen asymptotische Annäherung an einen maximalen Beschleunigungsbetrag vorsieht.

Die Sollbeschleunigung verläuft daher nicht konstant über der Zeit - speziell bezogen auf die Zeit, in der überhaupt eine von Null verschiedene Antriebs-Sollbeschleunigung angelegt wird - sondern sie weist einen wechselnden Verlauf auf.

Unter Beschleunigungsbetrag ist hier der Betragswert der Beschleunigung zu verstehen. Auf diese Weise werden ruckartige Beschleunigungssprünge vermieden und der maximale Beschleunigungsbetrag begrenzt.

Erfindungsgemäß ist also erkannt worden, dass wichtiger noch als das Vermeiden eines Übertretens einer Tempovorgabe durch ein Verkehrszeichen es ist zu verhindern, dass die mittels des Tempomats vorgegebene Wunschgeschwindigkeit dazu führt, dass das Kraftfahrzeug stark beschleunigt, wenn das gleichzeitig zu einer raschen Verringerung des Abstands zu dem vorausfahrenden Fahrzeug führt. Die Erfindung zielt also darauf übermäßige Beschleunigungswerte zu vermeiden, insbesondere da diese regelmäßig zu umgekehrten Korrektureingriffen führen, also etwa starkes Bremsen auf ein zu starkes Beschleunigen. Dies dient sowohl dem Komfort als auch der Verringerung des Kraftstoffverbrauchs.

Gemäß einer bevorzugten Ausführungsform bestimmt die Erfassungsvorrichtung eine Tempobegrenzung, welche für einen aktuell von dem Kraftfahrzeug befahrenen Straßenabschnitt gilt. Alternativ oder zusätzlich kann die Erfassungsvorrichtung vorzugsweise eine Tempobegrenzung bestimmen, welche für einen zukünftig zu befahrenden Straßenabschnitt in einer Sichtweite des Kraftfahrzeugs gilt. Ebenso kann es sein, dass dieser zukünftig zu befahrende Straßenabschnitt außerhalb der Sichtweite des Kraftfahrzeugs gilt. Für den Begriff der Sichtweite ist hierbei nicht nur auf eine Entfernung, sondern auf das Vorliegen einer hindernisfreien Sichtlinie abzustellen.

Eine weitere bevorzugte Ausführungsform ist dadurch gekennzeichnet, dass die Erfassungsvorrichtung eine Kameraanordnung umfasst, welche zum Bestimmen der Tempobegrenzung eine Streckeninformation optisch erfasst. Auf diese Weise kann also dynamisch die Streckeninformation ermittelt werden. Alternativ oder zusätzlich kann die Erfassungsvorrichtung eine Kartenverarbeitungsvorrichtung umfassen, welche zum Bestimmen der Tempobegrenzung eine Streckeninformation von einer Karte für den Straßenabschnitt ausliest. Diese Karte kann mit der Streckeninformation oder mit einer Vielzahl von Streckeninformationen in einem Kartenspeicher der Kartenverarbeitungsvorrichtung hinterlegt sein.

Hier ist weiter vorzugsweise vorgesehen, dass die Kartenverarbeitungsvorrichtung eine zu befahrende Fahrstrecke für das Kraftfahrzeug basierend auf einer Wahrscheinlichkeitsberechnung schätzt und der Straßenabschnitt auf dieser geschätzten Fahrstrecke liegt. Diese Wahrscheinlichkeitsberechnung kann etwa auf statistischen Informationen zu den von anderen Kraftfahrzeugen in der Vergangenheit gefahrenen Fahrstrecken beruhen.

Eine bevorzugte Ausgestaltung des erfindungsgemäßen Verfahrens sieht vor, dass die Erfassungsvorrichtung eine Funkvorrichtung umfasst, welche zum Bestimmen der Tempobegrenzung eine Streckeninformation von einem entfernten Fahrzeug drahtlos empfängt. Alternativ oder zusätzlich kann die Funkvorrichtung die Streckeninformation von einer stationären Streckeneinrichtung drahtlos empfängt.

Hinsichtlich der Streckeninformation ist bevorzugt vorgesehen, dass die Streckeninformation sich auf den Straßenabschnitt bezieht und ein Tempolimit, ein Verkehrszeichen, eine Verkehrssignalinformation, eine Kurveninformation, eine Verkehrssituationsinformation und/oder statistische Tempodaten umfasst. Ein solches Tempolimit kann einerseits als solches vorliegen, insbesondere durch Zuordnung mittels der obigen Karte. Andererseits kann das Tempolimit sich auch aus der Verarbeitung eines Verkehrszeichens ergeben. Eine Verkehrssignalinformation kann etwa der Zustand einer Ampel oder einer sonstigen Verkehrssignalanlage sein. Eine Kurveninformation kann insbesondere ein Maß über einen Kurvenradius o. dgl. des Straßenabschnitts umfassen. Eine Verkehrssituationsinformation kann eine Aussage über die Fahrzeuganzahl auf dem Straßenabschnitt umfassen. Die statistischen Tempodaten können etwa die durchschnittliche Fahrgeschwindigkeit von Fahrzeugen auf dem Straßenabschnitt umfassen, welche in der Vergangenheit und ggf. über einen längeren Zeitraum erfasst wurden.

Auch die Abwesenheit einer Tempobegrenzung kann als Streckeninformation verstanden werden. So ist es bevorzugt, dass die Streckeninformation sich auf den Straßenabschnitt bezieht und eine Kennzeichnung des Straßenabschnitts als begrenzungsfrei umfasst und dass die Erfassungsvorrichtung für den begrenzungsfreien Straßenabschnitt eine Tempobegrenzung bestimmt, welche für begrenzungsfreie Straßenabschnitte in einem Datenspeicher hinterlegt wurde. Auf diese Weise kann der Fahrer z. B. für Autobahnabschnitte ohne Geschwindigkeitsbegrenzung eine Wunschgeschwindigkeit vorgeben, welch bei jedem Befahren eines solchen Abschnitts wirksam wird. Dieser Datenspeicher kann auch identisch zu dem obigen Kartenspeicher sein.

Hierauf aufbauend ist es bevorzugt, dass die in dem Datenspeicher hinterlegte Tempobegrenzung durch eine Bedienschnittstelle des Kraftfahrzeugs einstellbar ist und nach Einstellung in dem Datenspeicher aktualisiert wird und dass nach einem Ausschalten des Zündungszustands des Kraftfahrzeugs die in dem Datenspeicher hinterlegte Tempobegrenzung auf einen Startwert zurückgesetzt wird. Auf diese Weise wird gewährleistet, dass bei einem Fahrerwechsel die von einem früheren Fahrer vorgenommene Einstellung nicht von einem nachfolgenden Fahrer übernommen wird.

Das Verbinden eines Anhängers mit dem Kraftfahrzeug beschränkt dessen Fahrverhalten und ist auch bezüglich des zulässigen Tempos normiert. Daher ist es bevorzugt, dass die Erfassungsvorrichtung eine Sensorvorrichtung zum Erfassen eines mit dem Kraftfahrzeug verbundenen Anhängers aufweist und im Falle eines mit dem Kraftfahrzeug verbundenen Anhängers die Tempobegrenzung anpasst. Das Risiko einer zu hohen Geschwindigkeit des Kraftfahrzeugs mit Anhänger wird dadurch minimiert. Dass ein Anhänger mit dem Kraftfahrzeug verbunden ist, kann alternativ oder zusätzlich auch anhand einer elektrischen Verbindung mit dem Anhänger und der Spannungsversorgung des Kraftfahrzeugs für den Anhänger erfasst werden.

Um neben einer wirksamen Tempobegrenzung auch die Wünsche des Fahrers bezüglich der Geschwindigkeit zu berücksichtigen, ist vorzugsweise vorgesehen, dass die Tempomatvorrichtung basierend auf einer Fahrervorgabe eine Tempomat-Sollgeschwindigkeit bestimmt und die Tempomat-Sollbeschleunigung basierend auf der Tempomat-Sollgeschwindigkeit bestimmt. Damit berücksichtigt die Tempomatvorrichtung also sowohl die Fahrervorgabe als auch die Tempobegrenzung bei der Bestimmung der Tempomat-Sollbeschleunigung.

Eine Möglichkeit einer solchen Fahrervorgabe sieht die ausdrückliche Bestimmung der Tempomat-Sollgeschwindigkeit durch den Fahrer vor. Eine bevorzugte Alternative sieht vor, dass die Fahrervorgabe einen Sollgeschwindigkeitsversatz umfasst und die Tempomat-Sollgeschwindigkeit auf dem Sollgeschwindigkeitsversatz und der Tempobegrenzung basiert. Auf diese Weise kann der Fahrer also angeben, dass er eine Geschwindigkeit des Kraftfahrzeugs jeweils um einen Betrag ober- oder unterhalb der Tempobegrenzung wünscht.

Bezüglich der Abstandsregelvorrichtung ist bevorzugt vorgesehen, dass sie die Abstandsregel-Sollbeschleunigung so bestimmt, dass ein Soll-Mindestabstand zu dem vorausfahrenden Fahrzeug eingehalten wird.

Schließlich ist es bevorzugt, dass das aktive Sollbeschleunigungsprofil aus einer Vielzahl von hinterlegten Sollbeschleunigungsprofilen bestimmt wird, wobei die Bestimmung des aktiven Sollbeschleunigungsprofils auf einer Differenz zwischen der Tempobegrenzung und der aktuellen Istgeschwindigkeit des Kraftfahrzeugs, auf der aktuellen Istgeschwindigkeit des Kraftfahrzeugs, auf der Art der aktuell von dem Kraftfahrzeug befahrenen Straße und/oder auf einer erwarteten Tempobegrenzung basiert. Entsprechend kann ein situationsabhängiges Sollbeschleunigungsprofil eingesetzt werden.

Weitere Merkmale und Vorteile der Erfindung ergeben sich aus der folgenden Beschreibung eines nicht einschränkend zu verstehenden Ausführungsbeispiels, das im Folgenden unter Bezugnahme auf die Figuren näher erläutert wird. In der Zeichnung zeigen schematisch:
- Fig. 1: ein Ausführungsbeispiel eines elektronischen Systems in einem Kraftfahrzeug zur Ausführung des erfindungsgemäßen Verfahrens,
- Fig. 2: ein Ablaufdiagramm zu einem Ausführungsbeispiel des erfindungsgemäßen Verfahrens,
- Fig. 3: ein Kraftfahrzeug mit dem elektronischen System der Fig. 1 zur Ausführung des erfindungsgemäßen Verfahrens in einer ersten Fahrsituation,
- Fig. 4: das Kraftfahrzeug der Fig. 3 in einer zweiten Fahrsituation und
- Fig. 5: einen Sollbeschleunigungsverlauf zur Verwendung in einem Ausführungsbeispiel des erfindungsgemäßen Verfahrens.

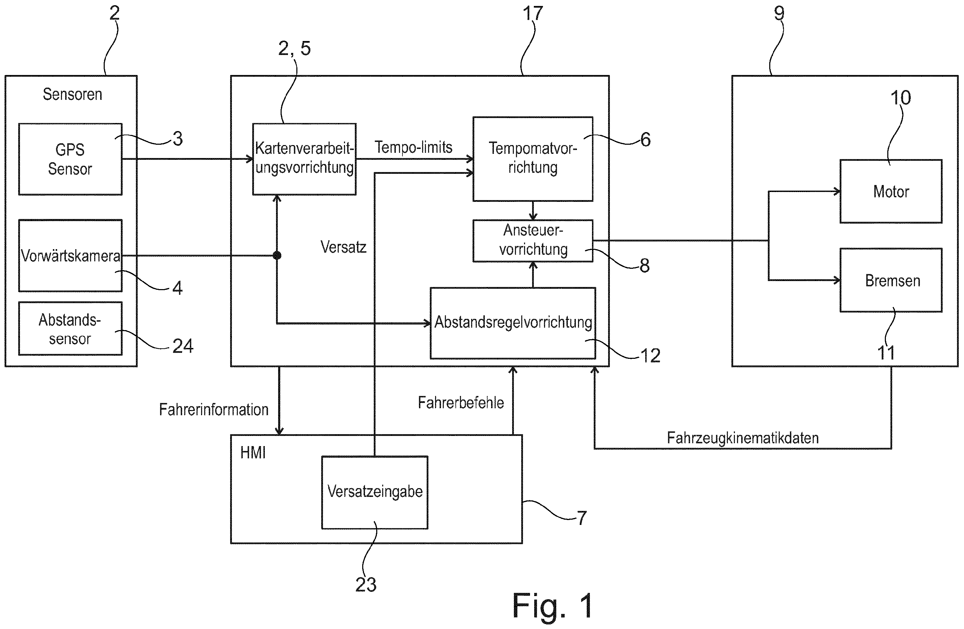

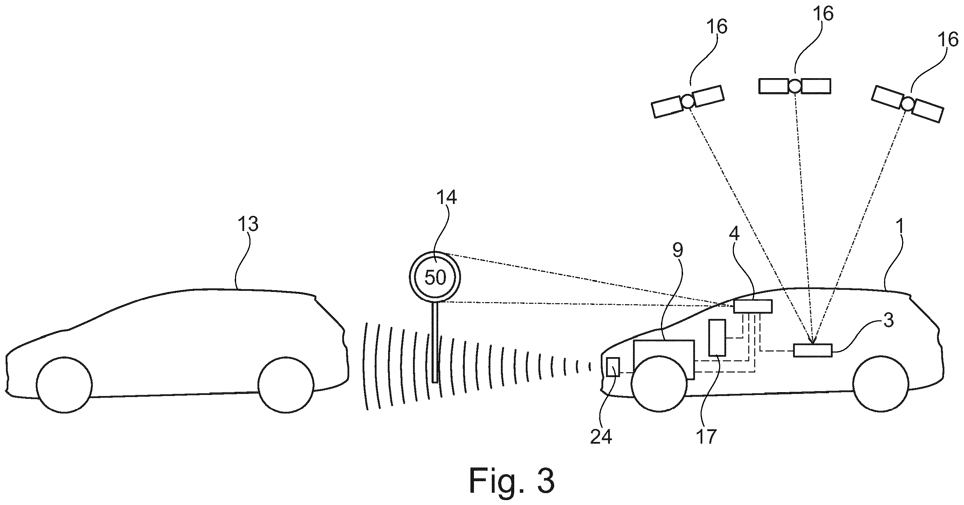

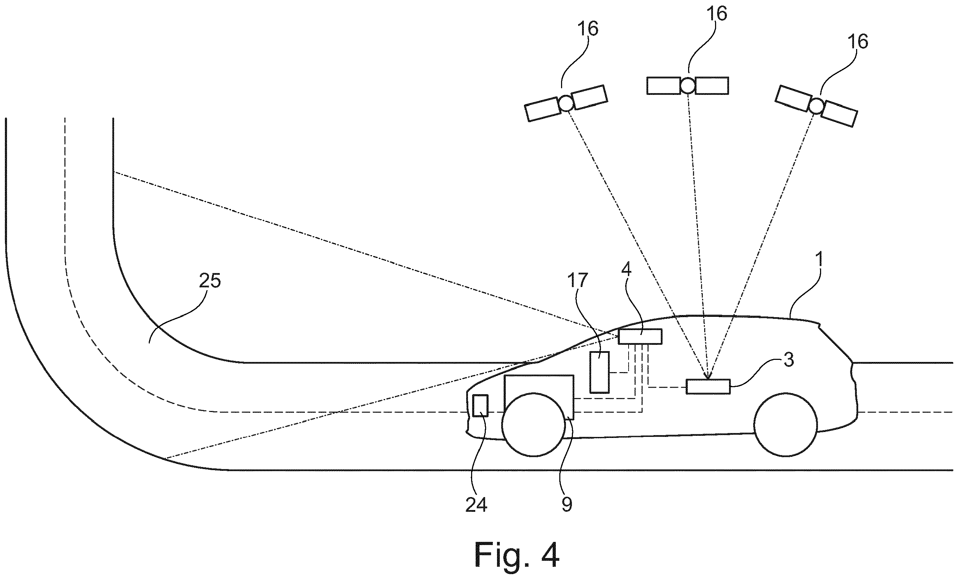

Das in der Fig. 1 gezeigte elektronische System dient zur automatischen Beschleunigungsanpassung in einem Kraftfahrzeug 1. Ein solches Kraftfahrzeug 1 ist jeweils in den Fig. 3 und 4 dargestellt. Eine Erfassungsvorrichtung 2 des Kraftfahrzeugs 1 weist einen Positionssensor 3, bei dem es sich hier um einen GPS-Empfänger handelt, eine Kameraanordnung 4, welche in Fahrtrichtung des Kraftfahrzeugs 1 nach vorne gerichtet ist und eine Logikeinheit auf, welche die von dem Positionssensor 3 und der Kameraanordnung 4 empfangenen Daten verarbeitet. In diesem Ausführungsbeispiel und wie bevorzugt umfasst die Erfassungsvorrichtung 2 ebenso einen Abstandssensor 24 zum Erfassen eines Fahrzeugabstands zu einem vorausfahrenden Fahrzeug 13, welches ebenfalls in der Fig. 3 dargestellt ist. Im vorliegenden Ausführungsbeispiel umfasst die Erfassungsvorrichtung 2 ferner eine Logikeinheit, die hier gleichzeitig eine Kartenverarbeitungsvorrichtung 5 bildet, welche Zugriff auf eine in einem Karten- bzw. Datenspeicher hinterlegte und hier nicht gesondert dargestellte Karte mit verschiedenen Streckeninformationen hat.

Das elektronische System weist ebenso eine Tempomatvorrichtung 6 auf, welche eine Tempobegrenzung von der Erfassungsvorrichtung 2 sowie eine Fahrervorgabe von einer Bedienschnittstelle 7 erhält. Die Fahrervorgabe besteht hier aus einem Versatz zu der Tempobegrenzung, und zwar dergestalt, dass eine Geschwindigkeit von 5 km/h über der Tempobegrenzung vorgegeben wird. Ein solcher Sollgeschwindigkeitsversatz wird über eine Versatzeingabe 23 der Bedienschnittstelle 7 eingegeben und kann - bezogen auf die Tempobegrenzung - sowohl positiv als auch negativ sein. Die Tempomatvorrichtung 6 gibt eine Tempomat-Sollbeschleunigung an eine Ansteuervorrichtung 8 aus, welche wiederum eine Antriebsvorrichtung 9 des Kraftfahrzeugs 1 mit einer Antriebs-Sollbeschleunigung ansteuert. Die Antriebsvorrichtung 9 kann Beschleunigung und Geschwindigkeit des Kraftfahrzeugs 1 dadurch beeinflussen, dass sie direkt auf Motor 10 und Bremsen 11 des Kraftfahrzeugs 1 zugreift. Ebenso empfängt die Tempomatvorrichtung 6 Daten zur Fahrzeugkinematik von der Antriebsvorrichtung 9.

Sollte die Erfassungsvorrichtung 2 weder aus der Kameraanordnung 4 noch aus der Kartenverarbeitungsvorrichtung 5 eine aktuelle Tempobegrenzung bestimmen können, so wird vorzugsweise die zuletzt bestimmte Tempobegrenzung beibehalten.

Ferner weist das elektronische System eine Abstandsregelvorrichtung 12 auf, die einen hier beispielhaft von dem Abstandssensor 24 erfassten Fahrzeugabstand zu einem vorausfahrenden Fahrzeug 13 empfängt. In diesem Ausführungsbeispiel werden die Logikeinheit und die mit ihr hier identische Kartenverarbeitungsvorrichtung 5, die Tempomatvorrichtung 6, die Abstandsregelvorrichtung 12 sowie die Ansteuervorrichtung 8 durch eine Prozessorvorrichtung 17 gebildet.

Sowohl die obige Versatzeingabe 23 als auch die Bedienschnittstelle 7 insgesamt kann für die Eingabe durch Tasten an dem Lenkrad des Kraftfahrzeugs 1 realisiert werden. Mit solchen Tasten lässt sich das obige elektronische System zwischen einem Ruhe- und einem Aktivzustand umschalten. Ferner kann der Fahrer das elektronische System durch aktiven Eingriff übersteuern. Dies kann sowohl über die Tasten als auch über das Gas- oder Bremspedal des Kraftfahrzeugs 1 erfolgen. Wahlweise schaltet sich das elektronische System nach einem solchen aktiven Eingriff in den Ruhezustand oder kehrt in den Zustand vor dem aktiven Eingriff zurück. Die Bedienschnittstelle 7 weist ebenso eine grafische Anzeige der aktuell bestimmten Tempobegrenzung und des Sollgeschwindigkeitsversatzes sowie eine situationsabhängige Warnausgabe bei Übergang in den Ruhezustand des elektronischen Systems

Eine beispielhafte Fahrsituation des Kraftfahrzeugs 1 zur Anwendung des erfindungsgemäßen Verfahrens ist in der Fig. 3 dargestellt. Darauf und auf den besagten Daten zur Fahrzeugkinematik - welche sie ebenfalls empfängt - basierend bestimmt die Abstandsregelvorrichtung 12 eine Abstandsregel-Sollbeschleunigung, welche an die Ansteuervorrichtung 8 übertragen wird. In der Ansteuervorrichtung 8 findet nun eine Begrenzung der Antriebs-Sollbeschleunigung auf den Wert der Abstandsregel-Sollbeschleunigung statt. Diese Begrenzung kann sich wahlweise auf die vorzeichenbehaftete Beschleunigung oder auf einen Betrag der Beschleunigung beziehen.

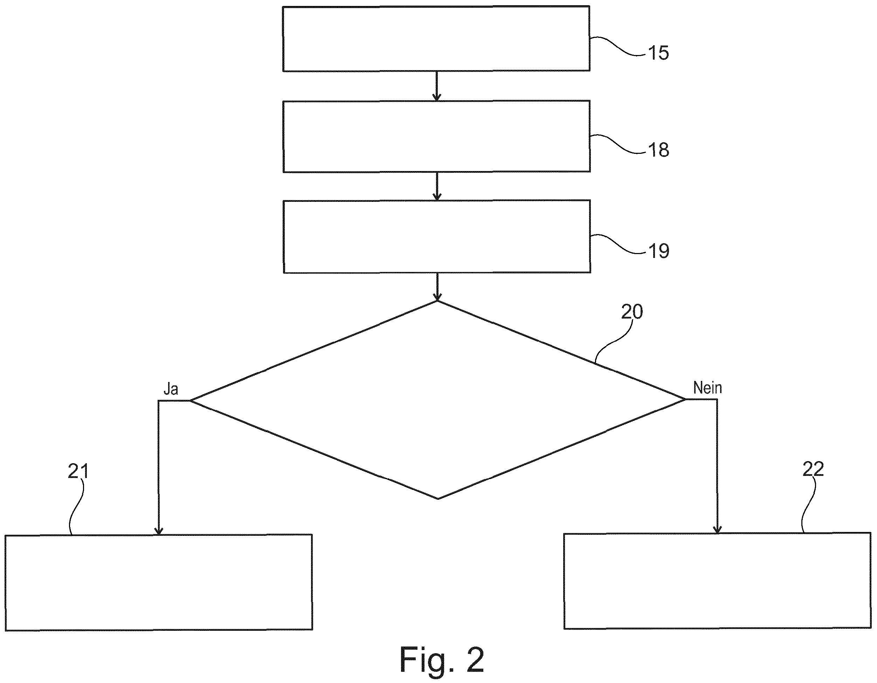

Die Fig. 2 zeigt dabei einen Ablauf, wie er sich in der Situation der Fig. 3 ergeben kann. Die Kameraanordnung 4 erfasst ein Verkehrszeichen 14 und bestimmt darauf basierend eine aktuell geltende Tempobegrenzung von 50 km/h in einem Erfassungsschritt 15. Ebenso hätte der Positionssensor 3, welcher Positionsinformationen von Navigationssatelliten 16 empfängt, durch einen Abgleich dieser Positionsinformationen mit einer in einem Kartenspeicher hinterlegten Karte, welche verschiedene Streckeninformationen aufweist, diese Tempobegrenzung bestimmen können.

Die Tempomatvorrichtung 6 der Prozessorvorrichtung 17 setzt in einem Geschwindigkeitsschritt 18 basierend auf der somit bestimmten Tempobegrenzung und einem beispielhaften Sollgeschwindigkeitsversatz von 5 km/h gemäß einer Fahrervorgabe eine Tempomat-Sollgeschwindigkeit von 55 km/h. In demselben Schritt berechnet die ebenfalls von der Prozessorvorrichtung 17 gebildete Abstandsregelvorrichtung 12 eine Abstandsregel-Sollgeschwindigkeit. Diese Berechnung basiert auf dem Fahrzeugabstand zu dem vorausfahrenden Fahrzeug 13, welchen Fahrzeugabstand der Abstandssensor 24 erfasst hat. Basierend auf dieser Abstandsregel-Sollgeschwindigkeit wird in dem Berechnungsschritt 19 dann die vorzeichenbehaftete Abstandsregel-Sollbeschleunigung berechnet und - dies wiederum basierend auf der obigen Tempomat-Sollgeschwindigkeit - die ebenfalls vorzeichenbehaftete Tempomat-Sollbeschleunigung berechnet. In dem nachfolgenden Vergleichsschritt 20 wird nun geprüft, ob die Tempomat-Sollbeschleunigung größer als die Abstandsregel-Sollbeschleunigung ist. Falls ja, steuert in einem Abstandsegelschritt 21 die Ansteuervorrichtung 8 die Antriebsvorrichtung 9 gemäß der Abstandsregel-Sollbeschleunigung an. Falls hingegen die Abstandsregel-Sollbeschleunigung die Tempomat-Sollbeschleunigung übersteigt, steuert in einem Tempomatschritt 22 die Ansteuervorrichtung 8 die Antriebsvorrichtung 9 gemäß der Tempomat-Sollbeschleunigung an.

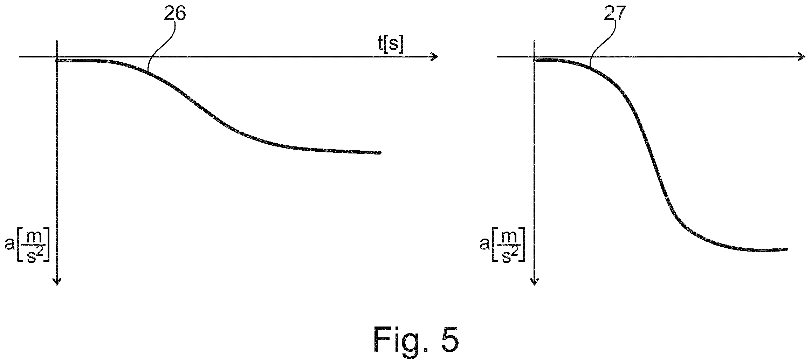

Die Berechnung der Tempomat-Sollbeschleunigung kann nun auf einem Sollbeschleunigungsprofil basieren, welches einen zeitlichen Sollbeschleunigungsverlauf 26, 27 definiert. Beispielhaft sind in der Fig. 5 zwei solcher Sollbeschleunigungsverläufe 26, 27 über der Zeit dargestellt. Beiden Sollbeschleunigungsverläufen 26, 27 ist gemeinsam, dass die resultierende Tempomat-Sollbeschleunigung, ausgehend von Null, einen Endwert in der Art einer asymptotischen Annäherung einnimmt. Das Sollbeschleunigungsprofil 26 gilt dabei beispielhaft für den Fall einer geringen Differenz zwischen der Tempobegrenzung und der aktuellen Istgeschwindigkeit des Kraftfahrzeugs 1 und einer niedrigen aktuellen Istgeschwindigkeit des Kraftfahrzeugs 1, wohingegen das Sollbeschleunigungsprofil 27 für den Fall einer höheren Differenz zwischen der Tempobegrenzung und der aktuellen Istgeschwindigkeit des Kraftfahrzeugs 1 sowie einer höheren aktuellen Istgeschwindigkeit des Kraftfahrzeugs 1.

Wieder bezugnehmend auf die Fig. 3, ist es anstelle der Erfassung des Verkehrszeichens 14 durch die Kameraanordnung 4 und der darauf basierenden Bestimmung der Tempobegrenzung ebenso möglich, dass gemäß der in der Fig. 4 gezeigten Situation die Kameraanordnung 4 eine Kurveninformation 25 - also eine Information zu dem Krümmungsgrad eines zu befahrenden Straßenabschnitts - erfasst und basierend auf dieser Kurveninformation eine Tempobegrenzung bestimmt. In diesem Fall handelt es sich also nicht um eine Tempobegrenzung aufgrund einer Norm, sondern um eine Tempobegrenzung, welche sich aus den Fahreigenschaften des Kraftfahrzeugs 1 und der "Schwierigkeit" der der Kurveninformation 25 entsprechenden Kurve ergibt. Ebenso hätte der Positionssensor 3, welcher Positionsinformationen von Navigationssatelliten 16 empfängt, durch einen Abgleich dieser Positionsinformationen mit einer in einem Kartenspeicher hinterlegten Karte, welche verschiedene Streckeninformationen aufweist, diese Tempobegrenzung bestimmen können.

Es kann sein, dass eine Mindestgeschwindigkeit für die Tempomatvorrichtung 6 und/oder für die Abstandsregelvorrichtung 12 vorgegeben ist, unterhalb der die jeweilige Funktionsweise nicht oder nur eingeschränkt gegeben ist.

In einem ersten beispielhaften Szenario erfasst die Erfassungsvorrichtung 2 eine Tempobegrenzung, welche unterhalb dieser Mindestgeschwindigkeit liegt. Gleichzeitig gibt es kein vorausfahrendes Fahrzeug in Reichweite der Abstandsregelvorrichtung 12. In diesem Fall beschleunigt die Tempomatvorrichtung 6 das Kraftfahrzeug 1 bis auf die Mindestgeschwindigkeit und schaltet das elektronische System dann in den Ruhezustand.

Ein zweites beispielhaftes Szenario entspricht dem obigen ersten Szenario mit dem Unterschied, dass durch einen positiven Sollgeschwindigkeitsversatz die von der Tempomatvorrichtung 6 bestimmte Tempomat-Sollgeschwindigkeit oberhalb der Mindestgeschwindigkeit liegt. In diesem Fall bleibt das elektronische System aktiv, bis - z. B. durch eine Verringerung des Sollgeschwindigkeitsversatzes - die Tempomat-Sollgeschwindigkeit unter die Mindestgeschwindigkeit sinkt, wobei dann wie in dem ersten Szenario verfahren wird.

In einem dritten beispielhaften Szenario ist ein vorausfahrendes Fahrzeug 13 in Reichweite vorhanden. Hier wird wiederum unterschieden, ob das Kraftfahrzeug 1 eine sogenannte "stop-and-go" Funktionalität aufweist. Diese erlaubt es der Abstandsregelvorrichtung 12, den Abstand des Kraftfahrzeugs 1 zum vorausfahrenden Fahrzeug 13 zu regeln, ohne dass dabei eine Mindestgeschwindigkeit eingehalten werden muss.

Wenn also in dem dritten Szenario das Kraftfahrzeug 1 keine "stop-and-go" Funktionalität aufweist, wird das elektronische System in den Ruhezustand geschaltet, sobald die Mindestgeschwindigkeit basierend auf der Abstandsregelvorrichtung 12 unterschritten wird. Weist das Kraftfahrzeug 1 die "stop-and-go" Funktionalität auf, dann bleibt das elektronische System aktiv solange das vorausfahrende Fahrzeug 13 in Reichweite des Abstandssensors 24 ist. Erst wenn das vorausfahrende Fahrzeug 13 z. B. durch eine abweichende Route oder durch Überschreiten der Tempobegrenzung außerhalb der Reichweite des Abstandssensors 24 gerät, schalt sich das elektronische System in den Ruhezustand.

## Patentansprüche

1. Verfahren zur automatischen Beschleunigungsanpassung bei einem Kraftfahrzeug (1), wobei eine Erfassungsvorrichtung (2) eine Tempobegrenzung bestimmt, welche für einen Straßenabschnitt gilt, wobei eine Tempomatvorrichtung (6) basierend auf der Tempobegrenzung eine Tempomat-Sollbeschleunigung bestimmt und wobei eine Ansteuervorrichtung (8) eine Antriebsvorrichtung (9) des Kraftfahrzeugs (1) basierend auf der Tempomat-Sollbeschleunigung mit einer Antriebs-Sollbeschleunigung ansteuert, wobei eine Abstandsregelvorrichtung (12) basierend auf einem erfassten Fahrzeugabstand zu einem vorausfahrenden Fahrzeug (13) eine Abstandsregel-Sollbeschleunigung bestimmt und dass die Antriebs-Sollbeschleunigung durch die Abstandsregel-Sollbeschleunigung so begrenzt wird, dass die Antriebs-Sollbeschleunigung unter der Abstandsregel-Sollbeschleunigung bleibt,
**dadurch gekennzeichnet, dass**
die Tempomatvorrichtung (6) die Tempomat-Sollbeschleunigung basierend auf einem aktiven Sollbeschleunigungsprofil bestimmt, wobei das Sollbeschleunigungsprofil einen zeitlichen Sollbeschleunigungsverlauf (26, 27) definiert und der zeitliche Sollbeschleunigungsverlauf (26, 27) mit zunehmender Zeit eine im Wesentlichen asymptotische Annäherung an einen maximalen Beschleunigungsbetrag vorsieht.

2. Verfahren nach Anspruch 1, **dadurch gekennzeichnet, dass**
die Erfassungsvorrichtung (2) eine Tempobegrenzung bestimmt, welche für einen aktuell von dem Kraftfahrzeug (1) befahrenen Straßenabschnitt gilt und/oder dass die Erfassungsvorrichtung (2) eine Tempobegrenzung bestimmt, welche für einen zukünftig zu befahrenden Straßenabschnitt in einer Sichtweite des Kraftfahrzeugs (1) und/oder einen zukünftig zu befahrenden Straßenabschnitt außerhalb der Sichtweite des Kraftfahrzeugs (1) gilt.

3. Verfahren nach Anspruch 1 oder 2, **dadurch gekennzeichnet, dass**
die Erfassungsvorrichtung (2) eine Kameraanordnung (4) umfasst, welche zum Bestimmen der Tempobegrenzung eine Streckeninformation optisch erfasst und/oder eine Kartenverarbeitungsvorrichtung (5) umfasst, welche zum Bestimmen der Tempobegrenzung eine Streckeninformation von einer Karte für den Straßenabschnitt ausliest.

4. Verfahren nach Anspruch 3, **dadurch gekennzeichnet, dass** die Kartenverarbeitungsvorrichtung (5) eine zu befahrende Fahrstrecke für das Kraftfahrzeug basierend (1) auf einer Wahrscheinlichkeitsberechnung schätzt und der Straßenabschnitt auf dieser geschätzten Fahrstrecke liegt.

5. Verfahren nach einem der Ansprüche 1 bis 4, **dadurch gekennzeichnet, dass**
die Erfassungsvorrichtung (2) eine Funkvorrichtung umfasst, welche zum Bestimmen der Tempobegrenzung eine Streckeninformation von einem entfernten Fahrzeug und/oder von einer stationären Streckeneinrichtung drahtlos empfängt.

6. Verfahren nach einem der Ansprüche 3 bis 5, **dadurch gekennzeichnet, dass**
die Streckeninformation sich auf den Straßenabschnitt bezieht und ein Tempolimit, ein Verkehrszeichen (14), eine Verkehrssignalinformation, eine Kurveninformation (25), eine Verkehrssituationsinformation und/oder statistische Tempodaten umfasst.

7. Verfahren nach einem der Ansprüche 3 bis 6, **dadurch gekennzeichnet, dass**
die Streckeninformation sich auf den Straßenabschnitt bezieht und eine Kennzeichnung des Straßenabschnitts als begrenzungsfrei umfasst und dass die Erfassungsvorrichtung (2) für den begrenzungsfreien Straßenabschnitt eine Tempobegrenzung bestimmt, welche für begrenzungsfreie Straßenabschnitte in einem Datenspeicher hinterlegt wurde.

8. Verfahren nach Anspruch 7, dass die in dem Datenspeicher hinterlegte Tempobegrenzung durch eine Bedienschnittstelle (7) des Kraftfahrzeugs (1) einstellbar ist und nach Einstellung in dem Datenspeicher aktualisiert wird und dass nach einem Ausschalten des Zündungszustands des Kraftfahrzeugs (1) die in dem Datenspeicher hinterlegte Tempobegrenzung auf einen Startwert zurückgesetzt wird.

9. Verfahren nach einem der Ansprüche 1 bis 8, **dadurch gekennzeichnet, dass**
die Erfassungsvorrichtung (2) eine Sensorvorrichtung zum Erfassen eines mit dem Kraftfahrzeug verbundenen Anhängers aufweist und im Falle eines mit dem Kraftfahrzeug (2) verbundenen Anhängers die Tempobegrenzung anpasst.

10. Verfahren nach einem der Ansprüche 1 bis 9, **dadurch gekennzeichnet, dass**
die Tempomatvorrichtung (6) basierend auf einer Fahrervorgabe eine Tempomat-Sollgeschwindigkeit bestimmt und die Tempomat-Sollbeschleunigung basierend auf der Tempomat-Sollgeschwindigkeit bestimmt.

11. Verfahren nach Anspruch 10, **dadurch gekennzeichnet, dass** die Fahrervorgabe einen Sollgeschwindigkeitsversatz umfasst und die Tempomat-Sollgeschwindigkeit auf dem Sollgeschwindigkeitsversatz und der Tempobegrenzung basiert.

12. Verfahren nach einem der Ansprüche 1 bis 11, **dadurch gekennzeichnet, dass**
die Abstandsregelvorrichtung die Abstandsregel-Sollbeschleunigung so bestimmt, dass ein Soll-Mindestabstand zu dem vorausfahrenden Fahrzeug (13) eingehalten wird.

13. Verfahren nach Anspruch 1, **dadurch gekennzeichnet, dass** das aktive Sollbeschleunigungsprofil aus einer Vielzahl von hinterlegten Sollbeschleunigungsprofilen bestimmt wird, wobei die Bestimmung des aktiven Sollbeschleunigungsprofils auf einer Differenz zwischen der Tempobegrenzung und der aktuellen Istgeschwindigkeit des Kraftfahrzeugs (1), auf der aktuellen Istgeschwindigkeit des Kraftfahrzeugs (1), auf der Art der aktuell von dem Kraftfahrzeug (1) befahrenen Straße und/oder auf einer erwarteten Tempobegrenzung basiert.

## Claims

1. Method for automatically adapting acceleration in a motor vehicle (1), wherein a detection device (2) determines a speed limit which applies to a section of road, a speed limit mode controller (6) determining a cruise control setpoint acceleration on the basis of the speed limit, and an actuation device (8) actuating a drive device (9) of the motor vehicle (1) with a drive setpoint acceleration on the basis of the cruise control setpoint acceleration, wherein a cruise & follow mode controller (12) determines a distance control setpoint acceleration on the basis of a detected vehicle distance from a vehicle (13) travelling ahead, and in that the drive setpoint acceleration is limited by the distance control setpoint acceleration in such a way that the drive setpoint acceleration remains below the distance control setpoint acceleration,
**characterized in that**
the speed limit mode controller (6) determines the cruise control setpoint acceleration on the basis of an active setpoint acceleration profile, wherein the setpoint acceleration profile defines a setpoint acceleration profile (26, 27) plotted against the time and the setpoint acceleration profile (26, 27) plotted against the time provides, as the time progresses, an essentially asymptotic approach to a maximum acceleration absolute value.

2. Method according to Claim 1, **characterized in that**
the detection device (2) determines a speed limit which applies to a section of road on which the motor vehicle (1) is currently travelling, and/or **in that** the detection device (2) determines a speed limit which applies to a section of road which is to be travelled on in future in the field of vision of the motor vehicle (1) and/or a section of road which is to be travelled on in future outside the field of vision of the motor vehicle (1).

3. Method according to Claim 1 or 2, **characterized in that** the detection device (2) comprises a camera arrangement (4) which, in order to determine the speed limit, acquires a route section information item visually and/or comprises a map processing device (5) which reads out a route section information item from a map for the section of road in order to determine the speed limit.

4. Method according to Claim 3, **characterized in that**
the map processing device (5) estimates a route to be travelled on for the motor vehicle on the basis (1) of a probability calculation, and the section of road lies on this estimated route.

5. Method according to one of Claims 1 to 4, **characterized in that** the detection device (2) comprises a radio device which, in order to determine the speed limit, receives a route section information item from a vehicle at a distance and/or from a stationary route section device in a wireless fashion.

6. Method according to one of Claims 3 to 5, **characterized in that** the route section information relates to the section of road and comprises a speed limit, a road sign (14), a traffic signal information item, a bend information item (25), a traffic situation information item and/or statistical speed data.

7. Method according to one of Claims 3 to 6, **characterized in that** the route section information relates to the section of road and comprises an identifier of the section of road as limit-free, and **in that** the detection device (2) for the limit-free section of road determines a speed limit which has been stored for limit-free sections of road in a data memory.

8. Method according to Claim 7, in that the speed limit which is stored in the data memory can be set by means of an operator control interface (7) of the motor vehicle (1) and is updated depending on the setting in the data memory, and in that, after the switching off of the ignition state of the motor vehicle (1), the speed limit which is stored in the data memory is reset to a starting value.

9. Method according to one of Claims 1 to 8, **characterized in that** the detection device (2) has a sensor device for detecting a trailer connected to the motor vehicle and adapts the speed limit when a trailer is connected to the motor vehicle (2).

10. Method according to one of Claims 1 to 9, **characterized in that** the speed limit mode controller (6) determines a cruise control setpoint speed on the basis of a driver's specification and determines the cruise control setpoint acceleration on the basis of the cruise control setpoint speed.

11. Method according to Claim 10, **characterized in that**
the driver's specification comprises a setpoint speed offset, and the cruise control setpoint speed is based on the setpoint speed offset and the cruise control limit.

12. Method according to one of Claims 1 to 11, **characterized in that** the cruise & follow mode controller determines the distance control setpoint acceleration in such a way that a setpoint minimum distance from the vehicle (13) travelling ahead is maintained.

13. Method according to Claim 1, **characterized in that**
the active setpoint acceleration profile is determined from a multiplicity of stored setpoint acceleration profiles, the determination of the active setpoint acceleration profile being based on a difference between the speed limit and the current actual speed of the motor vehicle (1), on the current actual speed of the motor vehicle (1), on the type of road being currently travelled on by the motor vehicle (1) and/or on an expected speed limit.

## Revendications

1. Procédé d'adaptation automatique de l'accélération sur un véhicule automobile (1), un dispositif de détection (2) déterminant une limitation de vitesse qui s'applique à un tronçon de route, un dispositif de régulation de vitesse (6) déterminant une accélération de consigne du régulateur de vitesse sur la base de la limitation de vitesse, et un dispositif de pilotage (8) pilotant un dispositif d'entraînement (9) du véhicule automobile (1) sur la base de l'accélération de consigne du régulateur de vitesse avec une accélération de consigne de l'entraînement, un dispositif de régulation de distance (12) déterminant sur la base d'une distance de véhicule détectée par rapport à un véhicule précédent (13) une accélération de consigne de la régulation de distance, et en ce que l'accélération de consigne de l'entraînement est limitée par l'accélération de consigne de la régulation de distance de telle sorte que l'accélération de consigne de l'entraînement reste inférieure à l'accélération de consigne de la régulation de distance,
**caractérisé en ce que** le dispositif de régulation de vitesse (6) détermine l'accélération de consigne du régulateur de vitesse sur la base d'un profil d'accélération de consigne actif, le profil d'accélération de consigne définissant une courbe d'accélération de consigne dans le temps (26, 27), et la courbe d'accélération de consigne dans le temps (26, 27) prévoyant avec le temps une approche substantiellement asymptotique d'une grandeur d'accélération maximale.

2. Procédé selon la revendication 1, **caractérisé en ce que** le dispositif de détection (2) détermine une limitation de vitesse qui s'applique à un tronçon de route actuellement emprunté par le véhicule automobile (1), et/ou **en ce que** le dispositif de détection (2) détermine une limitation de vitesse qui s'applique à un tronçon de route à emprunter dans le futur à la portée de vue du véhicule automobile (1), et/ou d'un tronçon de route à emprunter dans le futur hors de la portée de vue du véhicule automobile (1).

3. Procédé selon la revendication 1 ou 2, **caractérisé en ce que** le dispositif de détection (2) comprend un agencement de caméra (4) qui détecte optiquement une information d'itinéraire pour déterminer la limitation de vitesse, et/ou comprend un dispositif de traitement cartographique (5) qui lit une information d'itinéraire sur une carte pour le tronçon de route pour déterminer la limitation de vitesse.

4. Procédé selon la revendication 3, **caractérisé en ce que** le dispositif de traitement cartographique (5) estime un itinéraire à emprunter pour le véhicule automobile sur la base (1) d'un calcul de probabilité, et le tronçon de route se trouve sur cet itinéraire estimé.

5. Procédé selon l'une quelconque des revendications 1 à 4, **caractérisé en ce que** le dispositif de détection (2) comprend un dispositif radio qui reçoit sans fil une information d'itinéraire de la part d'un véhicule éloigné et/ou d'un dispositif d'itinéraire stationnaire pour déterminer la limitation de vitesse.

6. Procédé selon l'une quelconque des revendications 3 à 5, **caractérisé en ce que** l'information d'itinéraire concerne le tronçon de route et comprend une limitation de vitesse, un panneau routier (14), une information de signalisation, une information de virage (25), une information de situation de trafic et/ou des données de vitesse statistiques.

7. Procédé selon l'une quelconque des revendications 3 à 6, **caractérisé en ce que** l'information d'itinéraire concerne le tronçon de route et comprend une identification du tronçon de route comme étant sans limitation, et **en ce que** le dispositif de détection (2) détermine pour le tronçon de route sans limitation une limitation de vitesse qui a été mémorisée dans une mémoire de données pour le tronçon de route sans limitation.

8. Procédé selon la revendication 7, en ce que la limitation de vitesse mémorisée dans la mémoire de données peut être réglée par une interface de commande (7) du véhicule automobile (1), et est mise à jour dans la mémoire de données après le réglage, et en ce que la limitation de vitesse mémorisée dans la mémoire de données est réinitialisée sur une valeur initiale après désactivation de l'état d'allumage du véhicule automobile (1).

9. Procédé selon l'une quelconque des revendications 1 à 8, **caractérisé en ce que** le dispositif de détection (2) présente un dispositif capteur pour détecter une remorque reliée au véhicule automobile, et adapte la limitation de vitesse si une remorque est reliée au véhicule automobile (2).

10. Procédé selon l'une quelconque des revendications 1 à 9, **caractérisé en ce que** le dispositif de régulation de vitesse (6) détermine une vitesse de consigne du régulateur de vitesse sur la base d'une consigne du conducteur, et détermine l'accélération de consigne du régulateur de vitesse sur la base de la vitesse de consigne du régulateur de vitesse.

11. Procédé selon la revendication 10, **caractérisé en ce que** la consigne du conducteur comprend un décalage de vitesse de consigne, et la vitesse de consigne du régulateur de vitesse est basée sur le décalage de vitesse de consigne et la limitation de vitesse.

12. Procédé selon l'une quelconque des revendications 1 à 11, **caractérisé en ce que** le dispositif de régulation de distance détermine l'accélération de consigne de la régulation de distance de telle sorte qu'une distance de consigne minimale par rapport au véhicule précédent (13) est respectée.

13. Procédé selon la revendication 1, **caractérisé en ce que** le profil d'accélération de consigne actif est déterminé à partir d'une pluralité de profils d'accélération de consigne mémorisés, la détermination du profil d'accélération de consigne actif étant basée sur une différence entre la limitation de vitesse et la vitesse réelle actuelle du véhicule automobile (1), sur la vitesse réelle der du véhicule automobile (1), sur le type de la route actuellement empruntée par le véhicule automobile (1), et/ou sur une limitation de vitesse anticipée.
